# EUROPÄISCHE PATENTSCHRIFT

(11) **EP 3 478 430 B1**
(45) Veröffentlichungstag und Bekanntmachung des Hinweises auf die Patenterteilung: **08.04.2026**
(21) Anmeldenummer: 17734072.6
(22) Anmeldetag: 29.06.2017
(51) Int. Cl.: B22C 3/00, B22C 9/02

(54) **SCHLICHTEZUSAMMENSETZUNG ZUR HERSTELLUNG VON FORMÜBERZÜGEN AUF VERLORENEN FORMEN BZW. AUF KERNEN FÜR DEN EISEN- UND STAHLGUSS**
WASH COMPOSITION FOR MAKING FACINGS ON LOST MOLDS OR ON CORES FOR IRON AND STEEL CASTING OPERATIONS
COMPOSITION D'ENDUIT DESTINÉ À LA FABRICATION DE REVÊTEMENTS DE MOULES PERDUS OU DE NOYAUX DESTINÉS AU MOULAGE DE FONTE ET AU MOULAGE D'ACIER

(30) Priorität: 30.06.2016 DE 102016211930
(43) Veröffentlichungstag der Anmeldung: 08.05.2019
(73) Patentinhaber: HÜTTENES-ALBERTUS Chemische Werke Gesellschaft mit beschränkter Haftung, 40549 Düsseldorf (DE)
(72) Erfinder: HÖFT, René, 26529 Rechtsupweg (DE)
(74) Vertreter: Eisenführ Speiser
(86) Internationale Anmeldenummer: PCT/EP2017/066105
(87) Internationale Veröffentlichungsnummer: WO 2018/002206

(56) Entgegenhaltungen:
- WO-A1-93/17815
- CN-A- 101 817 058
- CN-A- 104 550 677
- CN-A- 105 170 888
- DD-A1- 63 853
- DE-A1- 102007 031 448
- DE-U1- 202015 105 368
- DE-U1- 202015 105 368
- US-A- 2 618 530

## Beschreibung

Die vorliegende Erfindung betrifft eine Schlichtezusammensetzung zur Herstellung von Formüberzügen auf verlorenen Formen bzw. auf Kernen für den Eisen- und Stahlguss, eine Verwendung eines Alkalimetall- oder Erdalkalimetallsalzes der Kohlensäure und/oder Diphosphorsäure zur Herstellung von Formüberzügen auf verlorenen Formen bzw. auf Kernen für den Eisen- und Stahlguss, ein Verfahren zur Herstellung eines Gussstücks sowie Gießform aus einem chemisch gebundenen Formgrundstoff zur Herstellung eines Gussstücks.

Die meisten Erzeugnisse der Eisen- und Stahlindustrie sowie der Nichteisenmetallindustrie durchlaufen zur ersten Formgebung Gießprozesse. Dabei werden die Schmelzflüssigwerkstoffe, Eisenmetalle bzw. Nichteisenmetalle, in geformte Gegenstände mit bestimmten Werkstückeigenschaften überführt. Für die Formgebung der Gussstücke müssen zunächst zum Teil sehr komplizierte Gießformen zur Aufnahme der Metallschmelze hergestellt werden. Die Gießformen werden unterteilt in verlorene Formen, die nach jedem Guss zerstört werden, sowie Dauerformen, mit denen jeweils eine große Anzahl von Gussstücken hergestellt werden kann. Die verlorenen Formen bestehen meist aus einem feuerfesten, körnigen Formstoff, der mit Hilfe eines härtbaren Bindemittels verfestigt wird.

Formen sind Negative, sie enthalten den auszugießenden Hohlraum, der das zu fertigende Gussstück ergibt. Die Innenkonturen des zukünftigen Gussstücks werden durch Kerne gebildet. Bei der Herstellung der Form wird mittels eines Modells des zu fertigenden Gussstücks der Hohlraum in den Formstoff geformt. Innenkonturen werden durch Kerne dargestellt, die in einem separaten Kernkasten geformt werden.

Zur Herstellung der Gießformen können sowohl organische als auch anorganische Bindemittel eingesetzt werden, deren Aushärtung durch kalte oder heiße Verfahren erfolgen kann. Als kalte Verfahren bezeichnet man dabei Verfahren, bei denen die Aushärtung im Wesentlichen bei Raumtemperatur ohne Erhitzen der Formstoffmischung erfolgt. Die Aushärtung erfolgt dabei meist durch eine chemische Reaktion, die beispielsweise dadurch ausgelöst werden kann, dass ein gasförmiger Katalysator durch die zu härtende Formstoffmischung geleitet wird, oder indem der Formstoffmischung ein flüssiger Katalysator zugesetzt wird. Bei heißen Verfahren wird die Formstoffmischung nach der Formgebung auf eine ausreichend hohe Temperatur erhitzt, um beispielsweise das im Bindemittel enthaltene Lösungsmittel auszutreiben, oder um eine chemische Reaktion zu initiieren, durch welche das Bindemittel durch Vernetzen ausgehärtet wird.

Bei der Herstellung von Gießformen für große Gussstücke, beispielsweise Motorblöcke von Schiffsdieseln oder große Maschinenteile, wie Naben von Rotoren für Windkraftwerke, werden meist sogenannte "No-Bake-Bindemittel" verwendet. Beim "No-Bake-Verfahren" wird der feuerfeste Formgrundstoff (z. B. Sand) häufig zunächst mit einem Katalysator (Härter) belegt, anschließend das Bindemittel zugegeben und durch Mischen gleichmäßig auf den bereits mit Katalysator beschichteten Körnern des feuerfesten Formgrundstoffs verteilt. Bei diesem Verfahren wird häufig mit sogenannten kontinuierlichen Durchlaufmischern gearbeitet. Die resultierende Formstoffmischung lässt sich dann zu einem Formkörper formen. Da Bindemittel und Katalysator gleichmäßig in der Formstoffmischung verteilt sind, erfolgt auch bei großen Formkörpern die Aushärtung weitgehend gleichmäßig.

Gusseisen mit Kugelgraphit (GJS) ist ein Eisen-Kohlenstoff-Werkstoff, dessen Kohlenstoffanteil vorwiegend in kugelförmiger (globularer) Form vorliegt. Gusseisen mit Kugelgraphit besitzt stahlähnliche Werkstoffeigenschaften. Durch die globulare Form des Graphits ergeben sich hohe Festigkeiten bei einer sehr guten, bleibenden Verformung (Dehnung). Durch niedrige Perlitanteile steigen sowohl die Bearbeitbarkeit als auch die dazugehörigen Werkzeugstandzeiten. Gusseisen mit Kugelgraphit wird beispielsweise in der Fahrzeugindustrie, dem Maschinen- und Schiffsbau, in Druckbehältern oder in der Windkraft eingesetzt. GJS-Gusseisenqualitäten sind in der DIN EN 1563, Gießereiwesen - Gusseisen mit Kugelgraphit, beschrieben.

Gusseisen mit lamellarem Graphit (GJL) besitzt ebenfalls hervorragende praktische Eigenschaften und stellt an den Fachmann in vielen Fällen ähnliche Anforderungen wie GJS. Die wesentlichen für die Praxis relevanten Unterschiede zwischen GJL und GJS sind dem Fachmann bekannt.

Beim GJS- und GJL-Guss treten als "narbige Oberflächen" bezeichnete Gussfehler auf.

Diese Fehler sind flächenhaft auftretende, pockennarbige Aufrauhungen und Vertiefungen an der Gussoberfläche bzw. in der Gusshaut. Sie sind mit einem weiß bis leicht bläulich erscheinenden Belag belegt. Deshalb wird der Fehler auch als "Weißer Belag" bezeichnet. Der Belag besteht im Wesentlichen aus (faserförmigen) Siliciumoxiden. Beim Strahlen der Gussstücke wird der Belag entfernt und es verbleit nur die narbige Oberfläche.

Der Fehler tritt bei GJS- und GJL-Gussstücken auf, die mittels Gießformen und Kernen hergestellt wurden, die aus einem chemisch gebundenen Formstoff bestehen, der wiederum aus Quarzsand und einem säuregehärteten Bindemittel besteht. Speziell bei säuregehärteten Furanharzformstoffen und anderen säuregehärteten, kalthärtenden Verfahren, wie dem Phenolharzverfahren, tritt der Fehler auf. Die häufigste Fehleranfälligkeit wurde bei regenerierten Furanharzsanden mit einem Glühverlust zwischen 3 und 4,5 % festgestellt.

Der Fehler tritt auch bei der Verwendung von Kernen und Formen auf, die nach dem Croning Verfahren hergestellten wurden, sowie beim tongebundenen Formstoffverfahren.

Eine detaillierte Beschreibung des Fehlerbildes kann den folgenden Literaturstellen entnommen werden:
1) M. Schrod, H. J. Wojtas, Oberflächenfehler insbesondere bei GJS, 7. Formstofftage, Duisburg Februar 2008
2) H. G. Levelink, F.P.M.A Julien, Eigenschaften von regeneriertem Furanharzsand Giesserei 68 (1981) 340
3) S. Hasse Guß- und Gefügefehler, Schiele & Schön, Berlin 2. Auflage, 2003, 343

Das Dokument DE 20 2015 105 368 U1 offenbart die Verwendung einer basischen Zusammensetzung umfassend eine basische Komponente bestehend aus einer oder mehreren Basen sowie eine Trägerflüssigkeit für die basische Komponente als Infiltrationsmittel für den Formstoff einer Gießform, die Quarzsand und ein mittels Säure gehärtetes Bindemittel umfasst, und zum Unterdrücken der Bildung von narbigen Oberflächen während des Gießverfahrens.

In der WO 2004/071738 A1 wird eine Beschichtungsmassen offenbart, die ein wasserlösliches Salz als Füllstoff umfasst. Es wird auch die Verwendung dieser Beschichtungsmassen als Schlichte für Salzkerne zur Verwendung in der Gießereitechnik beschrieben.

Das Dokument WO 2009/007093 A2 offenbart eine Schlichtezusammensetzung, umfassend keramische Materialien und mindestens ein Bindemittel, ausgewählt aus der Gruppe, bestehend aus Bindemitteln auf Basis von Wasserglas und Feuerfestbindern in Kombination mit fluoridhaltigen Bestandteilen. Das verwendete Wasserglas wird durch eine Reaktion von Carbonaten mit Quarzsand hergestellt, wobei bei der Umsetzung Carbondioxid entweicht und die Carbonate zersetzt werden.

In der DD 63 853 A1 wird eine Schlichte für Dauerformen zum Gießen von Leicht- und Buntmetallen offenbart. Die beschriebene Schlichte enthält ein bei Gießtemperatur nicht schmelzbares und sich nicht zersetzendes Alkali- und/oder Erdalkalisalz, vorzugsweise Natriumcarbonat oder Natriumsulfat oder Magnesiumsulfat.

In der EP 2 853 320 A1 werden eine Gießform und ein Gießkern aus beschichtetem Formsand für den Metallguss beschrieben. Auf der Oberfläche von Formsandkörnern des Formsandes wird eine erste Schicht angeordnet, wobei diese erste Schicht ausgehärtete ist und aus Wasserglas und/oder Phosphatglas besteht. Bei Phosphatgläsern handelt es sich um Gläser, die als Glasbildner überwiegend Phosphorpentoxid enthalten.

Die weißen Beläge treten überwiegend bei dickwandigen Teilen auf, also an mittleren bis schweren Gussstücken. Auch kleinere kompakte Gussstücke mit großem Modul sind betroffen. Am Gussteil tritt der Fehler zumeist in thermisch hochbelasteten Zonen, wie den Radien auf, kann sich aber von dort ausgehend auch über größere Flächen ziehen. Unterhalb der Oberfläche der betroffenen Zonen liegt der Graphit zum Teil entartet vor.

Der Gussfehler führt zu erhöhter Nacharbeit in der Gießerei und kann bisher nur durch ein erhöhtes Aufmaß an den betroffenen Flächen begegnet werden. Im Extremfall führen narbige Oberflächen zum Ausschuss des Gussstückes.

Aufgrund der Aufrauhungen und Vertiefungen an der Gussoberfläche müssen die betroffenen Flächen erst aufwendig geschliffen werden, bevor sie zur Qualitätskontrolle des Gussstücks einer Ultraschallprüfung oder Rissprüfung unterzogen werden.

Im Verfahren zur Herstellung von GJS- und GJL-Gussteilen durch kalthärtende Formstoffe mit verlorenen Formen besteht der Bedarf nach einem konstanten Prozess, durch den reproduzierbar und kostengünstig Gussteile hergestellt werden können, die gute Gussoberflächen aufweisen. Deshalb sind Lösungen gefordert, bei denen auch in Teilbereichen der Gussstückoberfläche narbige Oberflächen vermieden werden.

In S. Hasse Guß- und Gefügefehler, Schiele & Schön, Berlin 2. Auflag. 2003, 343 sind bereits einige Maßnahmen beschrieben, mit denen die Gussfehler zumindest vermindert werden können. Die beschriebenen Maßnahmen sind aber allesamt noch nicht zufriedenstellend, da sie beispielsweise durch eine Erhöhung der Sandabfälle zu einer Verteuerung des Gussprozesses führen und daher wirtschaftlich nicht darstellbar sind oder technisch schwierig umzusetzen sind.

In "Beitrag zum Entstehungsmechanismus des Gussoberflächenfehlers weißer Belag und Erarbeiten von Lösungsvorschlägen zur Vermeidung, Dissertation E. Potaturina, TU Bergakademie Freiberg, März 2014" werden Penetrationsschlichten beschrieben. Diese Penetrationsschlichten enthalten Mangan(IV)oxid (Braunstein). Mangan(IV)oxid (Braunstein) ist in Wasser und Alkoholen unlöslich und reagiert amphoter. Die Verwendung von Imprägnierschlichten mit Mangandioxid hat den Nachteil, dass das Mangandioxid die Feuerfestigkeit des Formstoffes herabsetzt. Es besteht die Gefahr der Bildung von Gussfehlern. Ferner können diese Penetrationsschlichten, wie von E. Potaturina beschrieben, den Gussfehler "narbige Oberflächen" bestenfalls reduzieren.

Üblicherweise werden in Gussverfahren Penetrationsschlichten verwendet, d.h. Schlichten, die in den Formstoff eindringen und mit ihren Feuerfeststoffen die Poren im Formstoff ausfüllen. Sie sind insbesondere zur Vermeidung von Gussfehlern wie Penetrationen und Erosionen geeignet. Diese Schlichten enthalten regelmäßig größere Mengen an Feuerfeststoffen und können auch anorganische oder organische Bindemittel enthalten. Handelsübliche Schlichten penetrieren regelmäßig beim Auftrag in den Formstoff.

Es war eine primäre Aufgabe der vorliegenden Erfindung, einen Weg zu finden, bei dem die Bildung von narbigen Oberflächen (weißen Belägen) während des Gießverfahrens unterdrückt bzw. stark vermindert wird. Hierdurch sollte es beispielsweise möglich sein, dass die GJS- und GJL-Gussteile mit üblichen Aufmaßen gefertigt werden können.

Ein wichtiger Aspekt der vorliegenden Erfindung war es, dass keine toxischen Chemikalien zum Lösen der primären Aufgabe verwendet werden und dass eine Emission von toxischen Verbindungen während des Gießens minimiert oder vollständig vermieden wird.

Idealerweise sollte es weiterhin möglich bleiben, die in der Gießerei üblichen Prozesse mit den üblicherweise in der Gießerei vorhanden Mitteln für die Kern- und Formherstellung anzuwenden. Es sollte bevorzugt auch möglich sein, nur die kritischen Bereiche der Formen und Kerne zur Herstellung der GJS- und GJL-Gussteile zu behandeln; hierdurch ließen sich Produktionskosten sparen. Auch sollte durch das Verfahren der Formstoffkreislauf möglichst gering belastet werden, um aufwendige Ausgleichmaßnahmen oder Neusandzugaben zu vermeiden. Ebenfalls sollte es möglich sein, zumindest einen, vorzugsweise mehrere oder sämtliche der nachfolgenden Punkte zu vermeiden bzw. zu erreichen:
- Vermeidung von Ausschuss
- Vermeidung von Nacharbeit
- Vermeidung von erhöhten Bearbeitungszugaben
- Erreichung von geforderten Oberflächengüten
- Vermeidung einer Versinterung der Gussoberflächen
- Senkung des Prüfaufwandes z. B. bei einer Ultraschallprüfung / Rissprüfung
- Verbesserung der mechanischen Kennwerte des fertigen Gussstücks.

Diese Aufgabe wird überraschenderweise gelöst durch eine Schlichtezusammensetzung zur Herstellung von Formüberzügen auf verlorenen Formen bzw. auf Kernen für den Eisen- und Stahlguss gemäß Anspruch 5.

Überraschenderweise haben eigene Untersuchungen gezeigt, dass Alkalimetall- oder Erdalkalimetallsalze der Kohlensäure und Alkalimetall- oder Erdalkalimetallsalz der Diphosphorsäure jeweils einzeln oder in Kombination miteinander den Gussfehler "weißer Belag" stark reduzieren oder vollständig vermeiden können. Dabei sind die Alkalimetall- oder Erdalkalimetallsalze der Kohlensäure und die Alkalimetall- oder Erdalkalimetallsalz der Diphosphorsäure toxikologisch unbedenklich.

Im Sinne dieser Erfindung wird unter einem Feuerfeststoff ein Material verstanden, das bei im Eisenguss und Stahlguss üblicherweise verwendeten Temperaturen zwischen 1300 und 1600 °C beständig ist, d.h. seine chemische Zusammensetzung auch unter in der Gussindustrie vorherrschenden oxidierenden Bedingungen beibehält und dabei bevorzugt auch seine physikalischen Eigenschaften beibehält.

In einer erfindungsgemäß besonders bevorzugten Ausgestaltung der erfindungsgemäßen Schlichtezusammensetzung handelt es sich um eine Deckschlichte und nicht um eine Infiltarationsschlichte.

Deckschlichte im Sinne der Erfindung ist eine Schlichte, die weniger als 2 mm in den Formstoff eindringt oder vorzugsweise nicht in den Formstoff eindringt und üblicherweise in direkten Kontakt mit der Schmelze kommt. Deckschlichten bilden nach dem Auftrag auf den Formstoff eine abdeckende Schicht auf dem Formstoff aus.

Infiltrationsschlichte im Sinne der Erfindung ist eine Schlichte, die mindesten 2-4 mm in den Formstoff eindringt.

Erfindungsgemäß bevorzugt sind Schlichtezusammensetzungen, wobei das Alkalimetall- oder Erdalkalimetallsalz der Kohlensäure ein primäres oder sekundäres Carbonat und/oder das Alkalimetall- oder Erdalkalimetallsalz der Diphosphorsäure ein Dihydrogendiphosphat ist.

Ein sekundäres Carbonat weist die allgemeine Formel MHCO₃ auf und ist ein Hydrogencarbonat und ein sekundäres Carbonat weist die allgemeine Formel M₂CO₃ oder MCO₃ auf, wobei M für ein Alkalimetall oder Erdalkalimetall steht.

Eigene Untersuchungen haben gezeigt, dass die Hydrogencarbonate bzw. die Dihydrogendiphosphate erfindungsgemäß besonders bevorzugt sind, da sie in den erfindungsgemäßen Schlichtezusammensetzungen zu besonders guten Gussergebnissen führen, wenn die Schlichtezusammensetzung zur Herstellung von Formüberzügen auf verlorenen Formen bzw. auf Kernen für den Eisen- und Stahlguss verwendet wird.

Erfindungsgemäß bevorzugt sind erfindungsgemäße Schlichtezusammensetzungen, wobei das Alkalimetall- oder Erdalkalimetallsalz der Kohlensäure ein Lithium-, Natrium-, Kalium-, Calcium-, Magnesium-, Barium- oder Strontiumsalz ist, besonders bevorzugt ist das Natriumsalz.

Erfindungsgemäß bevorzugt sind Schlichtezusammensetzungen, wobei das Alkalimetall- oder Erdalkalimetallsalz der Kohlensäure Natriumcarbonat oder Natriumhydrogencarbonat ist.

Überraschenderweise hat sich gezeigt, das Natriumhydrogencarbonat und Natriumcarbonat besonders gute Eigenschaften aufweisen. Natriumhydrogencarbonat wird als Nahrungsergänzungsmittel, z. B. in Backpulver, verwendet und ist daher toxikologisch unbedenklich. Natriumcarbonat wird ebenfalls als Nahrungsergänzungsmittel verwendet und ist unter dem Namen Sode geläufig. Außerdem sind beide Verbindungen in großen Mengen verfügbar und sind kostengünstig. Zudem weisen erfindungsgemäße Schlichtezusammensetzungen, die Natriumhydrogencarbonat oder Natriumcarbonat enthalten, eine sehr starke Verringerung bzw. eine Vermeidung des Gussfehlers "weißer Belag" auf.

Erfindungsgemäß bevorzugt sind Schlichtezusammensetzungen, umfassend 0,1 bis 50 Gew.-%, vorzugsweise 0,5 bis 30 Gew.-%, besonders bevorzugt 3 bis 15 Gew.-% des Alkalimetall- oder Erdalkalimetallsalzes der Kohlensäure, bezogen auf das Gesamtgewicht der Schlichtezusammensetzung.

Erfindungsgemäß bevorzugt sind Schlichtezusammensetzungen, umfassend 0,1 bis 50 Gew.-%, vorzugsweise 0,5 bis 30 Gew.-%, besonders bevorzugt 3 bis 15 Gew.-% des Alkalimetall- oder Erdalkalimetallsalzes der Diphosphorsäure, bezogen auf das Gesamtgewicht der Schlichtezusammensetzung.

Schlichtezusammensetzungen sind erfindungsgemäß bevorzugt, die ein Molverhältnis zwischen dem Alkalimetall- oder Erdalkalimetallsalz der Kohlensäure und dem Alkalimetall- oder Erdalkalimetallsalz der Diphosphorsäure im Bereich von 1 : 26 bis 10 : 2,6 aufweisen, vorzugsweise im Bereich von 1 : 13 bis 5 : 2,6 aufweisen, besonders bevorzugt im Bereich von 1 : 5,2 bis 1 : 1,3 aufweisen.

Eigene Untersuchungen haben gezeigt, dass der Gehalt an Alkalimetall- oder Erdalkalimetallsalzes der Kohlensäure oder Diphosphorsäure einen Einfluss auf die Qualität des Gussstücks hat. Bei zu geringen Anteilen entfaltet das Alkalimetall- oder Erdalkalimetallsalzs der Kohlensäure oder Diphosphorsäure keine oder eine sehr geringe Wirkung, während bei zu hohen Anteilen die Wirkung nicht mehr verbessert wird.

Erfindungsgemäß bevorzugt sind erfindungsgemäße Schlichtezusammensetzungen, wobei das Alkalimetall- oder Erdalkalimetallsalz der Diphosphorsäure Dinatriumdihydrogendiphosphat ist.

Überraschenderweise hat sich gezeigt, das Dinatriumdihydrogendiphosphat besonders gute Eigenschaften aufweist. Dinatriumdihydrogendiphosphat wird als Nahrungsergänzungsmittel, z. B. in Backpulver, verwendet und ist daher toxikologisch unbedenklich. Außerdem ist es in großen Mengen verfügbar und ist kostengünstig. Zudem weisen erfindungsgemäße Schlichtezusammensetzungen, die Dinatriumdihydrogendiphosphat enthalten, eine sehr starke Verringerung bzw. eine Vermeidung des Gussfehlers "weißer Belag" auf.

Eigene Untersuchungen haben überraschenderweise gezeigt, dass eine Mischung aus einem Alkalimetall- oder Erdalkalimetallsalz der Kohlensäure und einem Alkalimetall- oder Erdalkalimetallsalz der Diphosphorsäure zu einer fast vollständigen Vermeidung des Gussfehlers "weißer Belag" führt. Diese Mischungen weisen hierbei einen synergistischen Effekt auf, der mit den Einzelverbindungen in dieser Form nicht erreicht werden kann. Zudem wurde in eigenen Untersuchungen festgestellt, dass durch die Verwendung einer Mischung aus einem Alkalimetall- oder Erdalkalimetallsalz der Kohlensäure und einem Alkalimetall- oder Erdalkalimetallsalz der Diphosphorsäure auch eine Versinterung der Gussoberflächen sehr stark vermieden bzw. vollständig verhindert werden kann.

Erfindungsgemäß besonders bevorzugt sind Schlichtezusammensetzungen enthaltend als Alkalimetall- oder Erdalkalimetallsalz der Kohlensäure Natriumcarbonat und/oder Natriumhydrogencarbonat und als Alkalimetall- oder Erdalkalimetallsalz der Diphosphorsäure Dinatriumdihydrogendiphosphat.

Insbesondere die Mischung aus a) Natriumhydrogencarbonat und/oder Natriumcarbonat und b) Dinatriumdihydrogendiphosphat zeigt in eigenen Untersuchungen eine vollständige oder fast vollständige Vermeidung des Gussfehlers "weißer Belag" und eine Verhinderung der Versinterung der Gussoberfläche.

Schlichtezusammensetzungen sind erfindungsgemäß bevorzugt, die ein Gewichtsverhältnis zwischen a) Natriumhydrogencarbonat und/oder Natriumcarbonat und b) Dinatriumdihydrogendiphosphat im Bereich von 1 : 10 bis 10 : 1 aufweisen, vorzugsweise im Bereich von 1 : 5 bis 5 : 1, besonders bevorzugt im Bereich von 1 : 2 bis 2 : 1.

Erfindungsgemäß bevorzugt sind Schlichtezusammensetzungen, die eine Mischung aus einem Alkalimetall- oder Erdalkalimetallsalz der Kohlensäure und einem Alkalimetall- oder Erdalkalimetallsalz der Diphosphorsäure umfassen und wobei die Schlichtezusammensetzung einen pH-Wert von 7 bis 9,9 aufweist, vorzugsweise einen pH-Wert von 7,5 bis 9,5 aufweist.

In einer alternativen Ausgestaltung einer nicht erfindungsgemäßen Schlichtezusammensetzung umfasst die Schlichte ein Alkalimetall- oder Erdalkalimetallsalz der Kohlensäure allerdings kein Alkalimetall- oder Erdalkalimetallsalz der Diphosphorsäure und weist einen pH-Wert von 9 bis 10 auf, vorzugsweise einen pH-Wert von 9,5 bis 11,5 auf.

In einer alternativen Ausgestaltung einer nicht erfindungsgemäßen Schlichtezusammensetzung umfasst die Schlichte ein Alkalimetall- oder Erdalkalimetallsalz der Kohlensäure allerdings kein Alkalimetall- oder Erdalkalimetallsalz der Diphosphorsäure und weist einen pH-Wert von 9 bis 12 auf, vorzugsweise einen pH-Wert von 9,5 bis 11,5 auf.

In einer alternativen Ausgestaltung einer nicht erfindungsgemäßen Schlichtezusammensetzung umfasst die Schlichte ein Alkalimetall- oder Erdalkalimetallsalz der Diphosphorsäure allerdings kein Alkalimetall- oder Erdalkalimetallsalz der Kohlensäure und weist einen pH-Wert von 5 bis 8 auf, vorzugsweise einen pH-Wert von 5,5 bis 7,5 auf.

Erfindungsgemäß bevorzugt sind Schlichtezusammensetzungen, wobei die Trägerflüssigkeit Wasser ist oder Wasser enthält.

Wasser als Trägerflüssigkeit hat insbesondere den Vorteil, dass es leicht verfügbar, kostengünstig und toxikologisch unbedenklich ist. Zudem sind die Alkalimetall- oder Erdalkalimetallsalze der Kohlensäure (und insbesondere das Natriumhydrogencarbonat oder Natriumcarbonat) und die Alkalimetall- oder Erdalkalimetallsalze der Diphosphorsäure (und insbesondere das Dinatriumdihydrogendiphosphat) sehr gut in Wasser löslich.

Erfindungsgemäß bevorzugt sind erfindungsgemäße Schlichtezusammensetzungen, wobei die Trägerflüssigkeit ein Alkohol ist oder Alkohol enthält, vorzugsweise ein Alkohol ausgewählt aus der Gruppe bestehend aus Methanol, Ethanol, 1-Propanol, 2-Propanol, n-Butanol, iso-Butanol, sec-Butanol, tert-Butanol, Pentan-1-ol, Pentan-2-ol, Pentan-3-ol, 2-Methyl-butan-1-ol, 2-Methyl-butan-2-ol, 3-Methyl-butan-1-ol, 3-Methyl-butan-2-ol, 2,2-Dimethyl-propan-1-ol, Hexan-1-ol, Hexan-2-ol, Hexan-3-ol, 2-Methylpentan-1-ol, 3-Methylpentan-1-ol, 4-Methylpentan-1-ol, 2-Methylpentan-2-ol, 3-Methylpentan-2-ol, 4-Methylpentan-2-ol, 2-Methylpentan-3-ol, 3-Methylpentan-3-ol, 2,2-Dimethylbutan-1-ol, 2,3-Dimethylbutan-1-ol, 3,3-Dimethylbutan-1-ol, 2,3-Dimethylbutan-2-ol, 3,3-Dimethylbutan-2-ol, 2-Ethylbutan-1-ol und Mischungen daraus, besonders bevorzugt sind Ethanol, 1-Propanol, 2-Propanol und Mischungen daraus.

Erfindungsgemäß bevorzugt sind Schlichtezusammensetzungen, wobei die Trägerflüssigkeit eine Mischung aus einem oder mehreren organischen Lösungsmitteln und Wasser ist, wobei das organische Lösungsmittel vorzugsweise ein Alkohol ist. In eigenen Versuchen hat sich gezeigt, dass Wasser und insbesondere de bevorzugten Alkohole besonders gute praktische Eigenschaften aufweisen. Sie verdampfen ausreichend schnell und sind physiologisch unbedenklich bzw. wenig bedenklich und lassen sich ohne hohe Sicherheitsvorkehrungen in der Gießerei anwenden.

Erfindungsgemäß bevorzugt sind Schlichtezusammensetzungen, wobei der Feststoffgehalt der Schlichtezusammensetzung 5 bis 85 Gew.-% beträgt, vorzugsweise 10 bis 80 Gew.-% beträgt, besonders bevorzugt 30 bis 70 Gew.-% beträgt.

Erfindungsgemäß bevorzugt sind Schlichtezusammensetzungen, wobei die Schlichtezusammensetzung 10 bis 85 Gew.-% Feuerfeststoffe enthält, bezogen auf den Feststoffgehalt der Schlichtezusammensetzung.

Erfindungsgemäß bevorzugt sind Schlichtezusammensetzungen, wobei die Feuerfeststoffe ausgewählt sind aus der Gruppe bestehend aus Quarz, Aluminiumoxid (vorzugsweise Korund), Zirkondioxid, Aluminiumsilikaten, Mullit, Zirkonsande, Zirkonsilikaten, Olivin, Talk, Glimmer, Koks, Feldspat, Diatomit, kalzinierte Kaoline, Kaolinit, Metakaolinit, Magnesiumsilikaten, Eisenoxid, Bauxit, Graphit, und Mischungen daraus, vorzugsweise Magnesiumsilikaten (insbesondere Talk), Zirkonsilikaten und Mischungen daraus.

Erfindungsgemäß bevorzugt sind erfindungsgemäße Schlichtezusammensetzungen, zusätzlich umfassend Farbpigmente, rheologische Additive, Stellmittel und/oder Verdicker.

Erfindungsgemäß besonders bevorzugt sind Schlichtezusammensetzungen zur Herstellung von Formüberzügen auf verlorenen Formen bzw. auf Kernen für den Eisen- und Stahlguss bestehend aus oder umfassend
a) 3 bis 15 Gew.-% Natriumhydrogencarbonat und/oder Natriumcarbonat und 3 bis 15 Gew.-% Dinatriumdihydrogendiphosphat, jeweils bezogen auf das Gesamtgewicht der Schlichtezusammensetzung,
b) eine Trägerflüssigkeit, vorzugsweise ausgewählt aus der Gruppe bestehend aus Wasser, Ethanol, 1-Propanol, 2-Propanol und Mischungen daraus,
c) Feuerfeststoffe, ausgewählt aus der Gruppe bestehend aus Quarz, Aluminiumoxid (vorzugsweise Korund), Zirkondioxid, Aluminiumsilikaten, Mullit, Zirkonsande, Zirkonsilikaten, Olivin, Talk, Glimmer, Koks, Feldspat, Diatomit, kalzinierte Kaoline, Kaolinit, Metakaolinit, Magnesiumsilikaten, Eisenoxid, Bauxit, Graphit, und Mischungen daraus, vorzugsweise bestehend aus Magnesiumsilikaten (insbesondere Talk), Zirkonsilikaten und Mischungen daraus,

wobei die Schlichtezusammensetzung einen pH-Wert von 7 bis 9,9 aufweist, vorzugsweise einen pH-Wert von 7,5 bis 9,5 aufweist und
wobei das Gewichtsverhältnis zwischen a) Natriumhydrogencarbonat oder Natriumcarbonat und b) Dinatriumdihydrogendiphosphat vorzugsweise im Bereich von 1 : 10 bis 10 : 1 liegt, weiter bevorzugt im Bereich von 1 : 5 bis 5 : 1 liegt, besonders bevorzugt im Bereich von 1:2 bis 2:1 liegt.

Beschrieben wird auch die Verwendung eines Alkalimetall- oder Erdalkalimetallsalzes der Kohlensäure und/oder Alkalimetall- oder Erdalkalimetallsalzes der Diphosphorsäure zur Herstellung von Formüberzügen auf verlorenen Formen bzw. auf Kernen für den Eisen- und Stahlguss.

Ein weiterer Aspekt der vorliegenden Erfindung ist die Verwendung einer Schlichtezusammensetzung gemäß Anspruch 1.

Erfindungsgemäß ist die Verwendung zur Vermeidung oder Verminderung der Entstehung von weißem Belag auf der Oberfläche von Gussstücken während des Gießvorgangs.

Ein weiterer Aspekt der vorliegenden Erfindung betrifft die Verwendung eines Alkalimetall- oder Erdalkalimetallsalzes der Kohlensäure und Alkalimetall- oder Erdalkalimetallsalzes der Diphosphorsäure als Zusatz in Schlichten für die Gießereiindustrie gemäß Anspruch 13.

Erfindungsgemäß besonders bevorzugt ist die Verwendung von a) Natriumcarbonat und/oder b) Natriumhydrogencarbonat und c) Dinatriumdihydrogendiphosphat als Zusatz in Schlichten für die Gießereiindustrie.

Erfindungsgemäß ganz besonders bevorzugt ist die Verwendung von a) einer Mischung aus
a.i) Dinatriumdihydrogendiphosphat und
a.ii) Natriumhydrogencarbonat und/oder Natriumcarbonat als Zusatz in Schlichten für die Gießereiindustrie.

Erfindungsgemäß ebenfalls bevorzugt ist die Verwendung von a) Natriumcarbonat und/oder b) Natriumhydrogencarbonat und c) Dinatriumdihydrogendiphosphat als Zusatz in Schlichten für die Gießereiindustrie, sodass eine Erfindung gemäße Schlichtezsammensetzung resultiert.

Ein weiterer Aspekt der vorliegenden Erfindung betrifft ein Verfahren zur Herstellung eines Gussstücks gemäß Anspruch 2.

Erfindungsgemäße bevorzugt ist ein Verfahren zur Herstellung eines Gussstücks, bei dem vor dem Beschichten des zumindest einen Bereiches der Gießform mit der Schlichtezusammensetzung (Schritt (ii) des erfindungsgemäßen Verfahrens) eine Penetrationsschlichte auf den zumindest einen Bereich der Gießform aufgetragen wird. Die Penetrationsschlichte enthält Aluminiumoxid und/oder Kaolin,

besonders bevorzugt 50 bis 75 Gew.-% Aluminiumoxid und/oder 5 bis 10 Gew.-% Kaolin, jeweils bezogen auf das Gesamtgewicht der Penetrationsschlichte.

Ebenfalls erfindungsgemäß bevorzugt ist ein Verfahren zur Herstellung eines Gussstücks, bei dem vor dem Beschichten des zumindest einen Bereiches der Gießform mit der Schlichtezusammensetzung (Schritt (ii) des erfindungsgemäßen Verfahrens) eine erste Deckschlichte auf den zumindest einen Bereich der Gießform aufgetragen wird, wobei diese erste Deckschlichte kein Alkalimetall- oder Erdalkalimetallsalz der Kohlensäure und/oder kein Alkalimetall- oder Erdalkalimetallsalz der Diphosphorsäure umfasst. Hierbei ist es bevorzugt, wenn die aufgetragene erste Deckschlichte nach dem Auftragen getrocknet wird. Die erste Dechschlichte enthält Mullit und/oder Graphit, besonders bevorzugt 50 bis 75 Gew.-% Mullit und/oder 1 bis 5 Gew.-% Graphit, jeweils bezogen auf das Gesamtgewicht der Schlichte.

In einer besonders bevorzugten Ausgestaltung des erfindungsgemäßen Verfahrens zur Herstellung eines Gussstücks, wird vor dem Beschichten zumindest eines Bereiches der Gießform mit der Schlichtezusammensetzung (Schritt (ii) des erfindungsgemäßen Verfahrens) eine Penetrationsschlichte auf den zumindest einen Bereich der Gießform aufgetragen und anschließend wird eine erste Deckschlichte auf den zumindest einen Bereich der Gießform aufgetragen und getrocknet, wobei diese erste Deckschlichte kein Alkalimetall- oder Erdalkalimetallsalz der Kohlensäure und/oder kein Alkalimetall- oder Erdalkalimetallsalz der Diphosphorsäure umfasst.

Erfindungsgemäß besonders bevorzugt ist somit ein Verfahren zur Herstellung eines Gussstücks mit folgenden Schritten:
(a) Bereitstellen oder Herstellen einer Gießform aus chemisch gebundenem Formgrundstoff vorzugsweise umfassend ein oder mehrere mittels Säure gehärtete Bindemittel und Quarzsand,
(b) Beschichten zumindest eines Bereiches der Gießform mit einer Penetrationsschlichte,
(c) Beschichten zumindest eines Teils des in Schritt (b) beschichteten Bereiches der Gießform mit einer Deckschlichte, wobei diese erste Deckschlichte kein Alkalimetall- oder Erdalkalimetallsalz der Kohlensäure und/oder kein Alkalimetall- oder Erdalkalimetallsalz der Diphosphorsäure umfasst, und Trocknen der aufgetragenen ersten Deckschlichte,
(d) Beschichten zumindest eines Teils des in Schritt (c) beschichteten Bereichs der Gießform mit der Schlichtezusammensetzung und Trocknen der beschichteten Schlichtezusammensetzung,
(e) Füllen der Gießform mit einer schmelzflüssigen Eisen-Kohlenstoff-Legierung,
(f) Erstarrenlassen der Eisen-Kohlenstoff-Legierung in der Gießform, sodass ein Gussstück resultiert.

Ein weiterer Aspekt der vorliegenden Erfindung betrifft eine Gießform gemäß Anspruch 4.

Erfindungsgemäß bevorzugt ist eine Gießform, die zusätzlich mit einer Penetrationsschlichte beschichtet ist, wobei die Penetrationschlichte unterhalb der erfindungsgemäßen Schlichtezusammensetzung in den chemisch gebundenen Formgrundstoff penetriert ist.

Ebenfalls erfindungsgemäß bevorzugt ist eine Gießform, die zusätzlich eine Deckschlichte enthält, wobei diese Deckschlichte kein Alkalimetall- oder Erdalkalimetallsalz der Kohlensäure und/oder kein Alkalimetall- oder Erdalkalimetallsalz Diphosphorsäure umfasst, und wobei diese Deckschlichte eine Schicht zwischen der erfindungsgemäßen Schlichtezusammensetzung und dem chemisch gebundenen Formgrundstoff ausbildet.

Im Rahmen der durch die Ansprüche definierten vorliegenden Erfindung werden vorzugsweise mehrere der vorstehend als bevorzugt bezeichneten Aspekte gleichzeitig verwirklicht; insbesondere bevorzugt sind die sich aus den beigefügten Ansprüchen ergebenden Kombinationen solcher Aspekte und der entsprechenden Merkmale.

Die vorliegende Erfindung wird nachfolgend durch Beispiele und eine Figur näher erläutert.

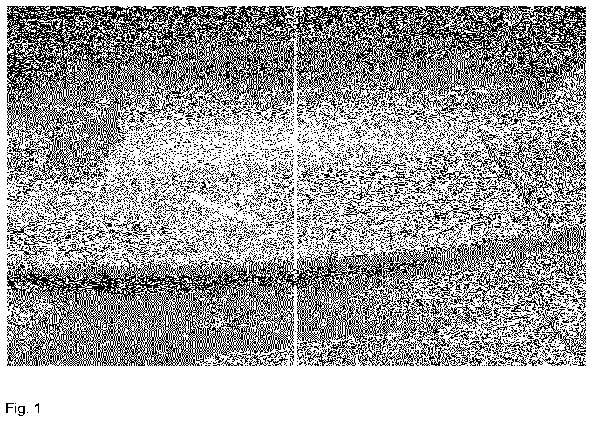

Figur 1 ist die Fotografie des in Beispiel 8 hergestellten Gussteils mit einem mit "X" gekennzeichnet Bereich. Der mit "X" gekennzeichnet Teil des Gussstücks stammt aus dem Teil der Form, der in Beispiel 8 mit einer erfindungsgemäßen Schlichtezusammensetzung beschichtet wurde. Die Oberfläche des Gussstücks ist frei von Fehlern und weist keinen "weißen Belag", keine Versinterung oder Vernarbung der Oberfläche auf.

### Beispiele:

### Beispiel 1:

Es wurde eine Form für ein Gussstück (ANZ E 101) aus EN-GJS 400-15 mit einem Gießgewicht von 19.200 kg und einem Stückgewicht von 15.800 kg hergestellt. Die Form weist mehrere Radien auf, die beim Guss thermisch stark belastet werden. Das Eisen-zu-Sand-Massenverhältnis lag bei ca. 1 : 1. Als Formstoff der Form wurde ein mechanisch regenerierter Furansand mit einer mittleren Körnung von 0,33 mm verwendet. Als Bindemittel wurde der Binder SRV-1 der Firma Hüttenes-Albertus, Düsseldorf und als Aktivator der Aktivator 7809 der Firma Hüttenes-Albertus, Düsseldorf verwendet.

Auf einen speziell gekennzeichneten Bereich (in diesem Beispiel Bereich "A") der Form wurde eine Schlichtezusammensetzung (pH-Wert 10,6) auf der Basis von hochfeuerfesten Magnesiumsilikaten und oxidkeramischen Anteilen und Wasser aufgetragen, die 9 Gew.-% Natriumcarbonat enthielt.

Nach dem Guss bei einer Gießtemperatur von ca. 1320 °C wurde das Gussstück begutachtet. Im mit der Schlichtezusammensetzung behandelten Bereich "A" zeigte das Gussstück keine Bildung von "weißem Belag". In dem unbehandelten Bereich des Gussstückes wurde "weißer Belag" festgestellt.

### Beispiel 2:

Beispiel 2 wurde analog zu Beispiel 1 durchgeführt, allerdings wurde eine Schlichtezusammensetzung (pH-Wert 5,5) auf der Basis von hochfeuerfesten Magnesiumsilikaten und oxidkeramischen Anteilen und Wasser aufgetragen, die 9 Gew.-% Dinatriumdihydrogendiphosphat enthielt.

Nach dem Guss bei einer Gießtemperatur von ca. 1320 °C wurde das Gussstück begutachtet. Im mit der Schlichtezusammensetzung behandelten Bereich zeigte das Gussstück keine Bildung von "weißem Belag". In dem unbehandelten Bereich des Gussstückes wurde "weißer Belag" festgestellt.

### Beispiel 3:

Beispiel 3 wurde analog zu Beispiel 1 durchgeführt, allerdings wurde eine erfindungsgemäße Schlichtezusammensetzung (pH-Wert 9,0) auf der Basis von hochfeuerfesten Magnesiumsilikaten und oxidkeramischen Anteilen und Wasser aufgetragen, die 4,5 Gew.-% Dinatriumdihydrogendiphoshat und 4,5 Gew.-% Natriumcarbonat enthielt.

Nach dem Guss bei einer Gießtemperatur von ca. 1320 °C wurde das Gussstück begutachtet. Im mit der erfindungsgemäßen Schlichtezusammensetzung behandelten Bereich zeigte das Gussstück keine Bildung von "weißem Belag". In dem unbehandelten Bereich des Gussstückes wurde "weißer Belag" festgestellt.

### Beispiel 4:

Beispiel 4 wurde analog zu Beispiel 1 durchgeführt, allerdings wurde eine Schlichtezusammensetzung (pH-Wert 5,5) auf der Basis von hochfeuerfesten Magnesiumsilikaten und oxidkeramischen Anteilen und Wasser aufgetragen, die 9 Gew.-% Dinatriumdihydrogendiphosphat enthielt.

Vor dem Auftrag der Schlichtezusammensetzung wurde die Form mit einer Penetrationsschlichte Foseco PDI 1658/1 vorbehandelt.

Nach dem Guss bei einer Gießtemperatur von ca. 1320 °C wurde das Gussstück begutachtet. Im mit der Schlichtezusammensetzung behandelten Bereich zeigte das Gussstück eine starke Verringerung der Bildung von "weißem Belag". In dem unbehandelten Bereich des Gussstückes wurde "weißer Belag" festgestellt.

### Beispiel 5:

Beispiel 5 wurde analog zu Beispiel 1 durchgeführt, allerdings wurde eine Schlichtezusammensetzung (pH-Wert 10,6) auf der Basis von hochfeuerfesten Magnesiumsilikaten und oxidkeramischen Anteilen und Wasser aufgetragen, die 9 Gew.-% Natriumcarbonat enthielt.

Vor dem Auftrag der Schlichtezusammensetzung wurde die Form mit einer Penetrationsschlichte Foseco PDI 1658/1 vorbehandelt.

Nach dem Guss bei einer Gießtemperatur von ca. 1320 °C wurde das Gussstück begutachtet. Im mit der Schlichtezusammensetzung behandelten Bereich zeigte das Gussstück eine starke Verringerung der Bildung von "weißem Belag". In dem unbehandelten Bereich des Gussstückes wurde "weißer Belag" festgestellt.

### Beispiel 6:

Beispiel 6 wurde analog zu Beispiel 1 durchgeführt, allerdings wurde eine Schlichtezusammensetzung (pH-Wert 5,5) auf der Basis von hochfeuerfesten Magnesiumsilikaten und oxidkeramischen Anteilen und Wasser aufgetragen, die 9 Gew.-% Dinatriumdihydrogendiphosphat enthielt.

Vor dem Auftrag der Schlichtezusammensetzung wurde die Form mit einer Penetrationsschlichte Foseco PDI 1658/1 und anschließend mit einer ersten Deckschlichte Foseco PDI 1514/4 vorbehandelt und anschließend getrocknet.

Nach dem Guss bei einer Gießtemperatur von ca. 1320 °C wurde das Gussstück begutachtet. Im mit der Schlichtezusammensetzung behandelten Bereich zeigte das Gussstück eine sehr starke Verringerung der Bildung von "weißem Belag". In dem unbehandelten Bereich des Gussstückes wurde "weißer Belag" festgestellt.

### Beispiel 7:

Beispiel 7 wurde analog zu Beispiel 1 durchgeführt, allerdings wurde eine Schlichtezusammensetzung (pH-Wert 10,6) auf der Basis von hochfeuerfesten Magnesiumsilikaten und oxidkeramischen Anteilen und Wasser aufgetragen, die 9 Gew.-% Natriumcarbonat enthielt.

Vor dem Auftrag der Schlichtezusammensetzung wurde die Form mit einer Penetrationsschlichte Foseco PDI 1658/1 und anschließend mit einer ersten Deckschlichte Foseco PDI 1514/4 vorbehandelt und anschließend getrocknet.

Nach dem Guss bei einer Gießtemperatur von ca. 1320 °C wurde das Gussstück begutachtet. Im mit der Schlichtezusammensetzung behandelten Bereich zeigte das Gussstück eine sehr starke Verringerung der Bildung von "weißem Belag". In dem unbehandelten Bereich des Gussstückes wurde "weißer Belag" festgestellt.

### Beispiel 8:

Beispiel 8 wurde analog zu Beispiel 1 durchgeführt, allerdings wurde eine erfindungsgemäße Schlichtezusammensetzung (pH-Wert 9,0) auf der Basis von hochfeuerfesten Magnesiumsilikaten und oxidkeramischen Anteilen und Wasser aufgetragen, die 4,5 Gew.-% Dinatriumdihydrogendiphosphat und 4,5 Gew.-% Natriumcarbonat enthielt.

Vor dem Auftrag der erfindungsgemäßen Schlichtezusammensetzung wurde die Form mit einer Penetrationsschlichte Foseco PDI 1658/1 und anschließend mit einer ersten Deckschlichte Foseco PDI 1514/4 vorbehandelt und anschließend getrocknet.

Nach dem Guss bei einer Gießtemperatur von ca. 1320 °C wurde das Gussstück begutachtet. Im mit der erfindungsgemäßen Schlichtezusammensetzung behandelten Bereich zeigte das Gussstück keinerlei Bildung von "weißem Belag" und keine Versinterung der Oberfläche. Die Oberfläche des Gussstücks in dem behandelten Bereich war absolut fehlerfrei ein Nacharbeiten des behandelten Bereiches war nicht nötig. In dem unbehandelten Bereich des Gussstückes wurde "weißer Belag" festgestellt.

Eine Fotografie der hergestellten Gussoberfläche ist in Figur 1 abgebildet (Bereich "X").

## Patentansprüche

1. Verwendung einer Schlichtezusammensetzung umfassend
a) 0,5 bis 50 Gew.-%, bezogen auf das Gesamtgewicht der Schlichtezusammensetzung, eines Alkalimetall- oder Erdalkalimetallsalzes der Kohlensäure und 0,5 bis 50 Gew.-%, bezogen auf das Gesamtgewicht der Schlichtezusammensetzung, eines Alkalimetall- oder Erdalkalimetallsalzes der Diphosphorsäure;
oder
0,5 bis 50 Gew.-%, bezogen auf das Gesamtgewicht der Schlichtezusammensetzung, eines Alkalimetall- oder Erdalkalimetallsalzes des Hydrogencarbonats;
oder
0,5 bis 50 Gew.-%, bezogen auf das Gesamtgewicht der Schlichtezusammensetzung, eines Alkalimetall- oder Erdalkalimetallsalzes des Dihydrogendiphosphats,
b) eine Trägerflüssigkeit und
c) Feuerfeststoffe,
als Deckschlichte zur Herstellung von Formüberzügen auf verlorenen Formen bzw. auf Kernen für den Eisen- und Stahlguss, wobei die Deckschlichte weniger als 2 mm in den Formstoff eindringt, nach dem Auftrag auf den Formstoff eine abdeckende Schicht auf dem Formstoff ausbildet und in direkten Kontakt mit der Schmelze kommt,
wobei die Verwendung als Deckschlichte zur Beschichtung von verlorenen Formen bzw. auf Kernen für den Eisen- und Stahlguss ist, die Quarzsand und ein mittels Säure gehärtetes Bindemittel umfassen, zur Vermeidung oder Verminderung der Entstehung von weißem Belag auf der Oberfläche von Gussstücken während des Gießvorgangs.

2. Verfahren zur Herstellung eines Gussstücks, mit folgenden Schritten:
(i) Bereitstellen oder Herstellen einer Gießform aus chemisch gebundenem Formgrundstoff, umfassend ein oder mehrere mittels Säure gehärtete Bindemittel und Quarzsand,
(ii) Beschichten zumindest eines Bereiches der Gießform mit einer Schlichtezusammensetzung umfassend
a) 0,5 bis 50 Gew.-%, bezogen auf das Gesamtgewicht der Schlichtezusammensetzung, eines Alkalimetall- oder Erdalkalimetallsalzes der Kohlensäure und 0,5 bis 50 Gew.-%, bezogen auf das Gesamtgewicht der Schlichtezusammensetzung, eines Alkalimetall- oder Erdalkalimetallsalzes der Diphosphorsäure;
oder
0,5 bis 50 Gew.-%, bezogen auf das Gesamtgewicht der Schlichtezusammensetzung, eines Alkalimetall- oder Erdalkalimetallsalzes des Hydrogencarbonats;
oder
3 bis 50 Gew.-%, bezogen auf das Gesamtgewicht der Schlichtezusammensetzung, eines Alkalimetall- oder Erdalkalimetallsalzes des Dihydrogendiphosphats,
b) eine Trägerflüssigkeit und
c) Feuerfeststoffe
und Trocknen der beschichteten Schlichtezusammensetzung,
(iii) Füllen der Gießform mit einer schmelzflüssigen Eisen-Kohlenstoff-Legierung,
(iv) Erstarrenlassen der Eisen-Kohlenstoff-Legierung in der Gießform, sodass ein Gussstück resultiert,
wobei vor dem Beschichten des zumindest einen Bereiches der Gießform mit der Schlichtezusammensetzung in Schritt (ii)
eine Penetrationsschlichte enthaltend Aluminiumoxid und/oder Kaolin,
oder
eine erste Deckschlichte auf den zumindest einen Bereich der Gießform aufgetragen wird, wobei diese erste Deckschlichte kein Alkalimetall- oder Erdalkalimetallsalz der Kohlensäure und kein Alkalimetall- oder Erdalkalimetallsalz der Diphosphorsäure umfasst,
wobei die erste Deckschlichte
- Mullit enthält,
und/oder
- Graphit enthält.

3. Verfahren nach Anspruch 2, wobei die erste Deckschlichte
- 50 bis 75 Gew.-% Mullit enthält, bezogen auf das Gesamtgewicht der Deckschlichte,
und/oder
- 1 bis 5 Gew.-% Graphit enthält, bezogen auf das Gesamtgewicht der Deckschlichte.

4. Gießform aus einem chemisch gebundenen Formgrundstoff zur Herstellung eines Gussstücks, wobei der chemisch gebundene Formgrundstoff ein oder mehrere mittels Säure gehärtete Bindemittel und Quarzsand umfasst, wobei zumindest ein Bereich der Gießform mit einer Schlichtezusammensetzung, umfassend
a) 0,5 bis 50 Gew.-%, bezogen auf das Gesamtgewicht der Schlichtezusammensetzung, eines Alkalimetall- oder Erdalkalimetallsalzes der Kohlensäure und 0,5 bis 50 Gew.-%, bezogen auf das Gesamtgewicht der Schlichtezusammensetzung, eines Alkalimetall- oder Erdalkalimetallsalzes der Diphosphorsäure;
oder
0,5 bis 50 Gew.-%, bezogen auf das Gesamtgewicht der Schlichtezusammensetzung, eines Alkalimetall- oder Erdalkalimetallsalzes des Dihydrogendiphosphats,
b) eine Trägerflüssigkeit und
c) Feuerfeststoffe
beschichtet ist,
wobei die Gießform zusätzlich eine Deckschlichte enthält, wobei diese Deckschlichte kein Alkalimetall- oder Erdalkalimetallsalz der Kohlensäure und kein Alkalimetall- oder Erdalkalimetallsalz der Diphosphorsäure umfasst, und wobei diese Deckschlichte eine Schicht zwischen der Schlichtezusammensetzung und dem chemisch gebundenen Formgrundstoff ausbildet.

5. Schlichtezusammensetzung zur Herstellung von Formüberzügen auf verlorenen Formen bzw. auf Kernen für den Eisen- und Stahlguss, umfassend
a) 0,5 bis 50 Gew.-%, bezogen auf das Gesamtgewicht der Schlichtezusammensetzung, eines Alkalimetall- oder Erdalkalimetallsalzes der Kohlensäure und 0,5 bis 50 Gew.-%, bezogen auf das Gesamtgewicht der Schlichtezusammensetzung, eines Alkalimetall- oder Erdalkalimetallsalzes der Diphosphorsäure,
b) eine Trägerflüssigkeit und
c) Feuerfeststoffe.

6. Schlichtezusammensetzung nach Anspruch 5, wobei die Schlichtezusammensetzung ein Molverhältnis zwischen dem Alkalimetall- oder Erdalkalimetallsalz der Kohlensäure und dem Alkalimetall- oder Erdalkalimetallsalz der Diphosphorsäure im Bereich von 1 : 26 bis 10 : 2,6 aufweist, vorzugsweise im Bereich von 1 : 13 bis 5 : 2,6 aufweisen, besonders bevorzugt im Bereich von 1 : 5,2 bis 1 : 1,3 aufweist.

7. Schlichtezusammensetzung nach einem der Ansprüche 5 oder 6, wobei
die Schlichtezusammensetzung einen pH-Wert von 7 bis 9,9 aufweist, vorzugsweise einen pH-Wert von 7,5 bis 9,5 aufweist
und/oder
das Alkalimetall- oder Erdalkalimetallsalz der Diphosphorsäure ein Dihydrogendiphosphat ist.

8. Schlichtezusammensetzung nach einem der Ansprüche 5 bis 7, wobei
(i) das Alkalimetall- oder Erdalkalimetallsalz der Kohlensäure Natriumhydrogencarbonat oder Natriumcarbonat ist
und/oder
(ii) das Alkalimetall- oder Erdalkalimetallsalz der Diphosphorsäure Dinatriumdihydrogendiphosphat ist.

9. Schlichtezusammensetzung nach einem der Ansprüche 5 bis 8, umfassend
(a) 0,5 bis 30 Gew.-%, besonders bevorzugt 3 bis 15 Gew.-% des Alkalimetall- oder Erdalkalimetallsalzes der Kohlensäure, bezogen auf das Gesamtgewicht der Schlichtezusammensetzung
und
(b) 0,5 bis 30 Gew.-%, besonders bevorzugt 3 bis 15 Gew.-% des Alkalimetall- oder Erdalkalimetallsalzes der Diphosphorsäure, bezogen auf das Gesamtgewicht der Schlichtezusammensetzung.

10. Schlichtezusammensetzung nach einem der Ansprüche 5 bis 9, wobei die Trägerflüssigkeit
a) Wasser ist oder Wasser enthält
und/oder
b) ein oder mehrere organische Lösungsmitteln ist oder diese enthält, wobei eins oder sämtliche organische Lösungsmittel vorzugsweise Alkohol ist bzw. Alkohole sind.

11. Schlichtezusammensetzung nach einem der Ansprüche 5 bis 10, wobei die Trägerflüssigkeit ein Alkohol ist oder Alkohol enthält, vorzugsweise ein Alkohol ausgewählt aus der Gruppe bestehend aus Methanol, Ethanol, 1-Propanol, 2-Propanol, n-Butanol, iso-Butanol, sec-Butanol, tert-Butanol, Pentan-1-ol, Pentan-2-ol, Pentan-3-ol, 2-Methyl-butan-1-ol, 2-Methyl-butan-2-ol, 3-Methyl-butan-1-ol, 3-Methyl-butan-2-ol, 2,2-Dimethyl-propan-1-ol, Hexan-1-ol, Hexan-2-ol, Hexan-3-ol, 2-Methylpentan-1-ol, 3-Methylpentan-1-ol, 4-Methylpentan-1-ol, 2-Methylpentan-2-ol, 3-Methylpentan-2-ol, 4-Methylpentan-2-ol, 2-Methylpentan-3-ol, 3-Methylpentan-3-ol, 2,2-Dimethylbutan-1-ol, 2,3-Dimethylbutan-1-ol, 3,3-Dimethylbutan-1-ol, 2,3-Dimethylbutan-2-ol, 3,3-Dimethylbutan-2-ol, 2-Ethylbutan-1-ol und Mischungen daraus, besonders bevorzugt sind Ethanol, 1-Propanol, 2-Propanol und Mischungen daraus.

12. Schlichtezusammensetzung nach einem der Ansprüche 5 bis 11, umfassend
a) 3 bis 15 Gew.-% Natriumhydrogencarbonat und/oder Natriumcarbonat und 3 bis 15 Gew.-% Dinatriumdihydrogendiphosphat, jeweils bezogen auf das Gesamtgewicht der Schlichtezusammensetzung,
b) eine Trägerflüssigkeit, vorzugsweise ausgewählt aus der Gruppe bestehend aus Wasser, Ethanol, 1-Propanol, 2-Propanol und Mischungen daraus,
c) Feuerfeststoffe, ausgewählt aus der Gruppe bestehend aus Quarz, Aluminiumoxid, vorzugsweise Korund, Zirkondioxid, Aluminiumsilikaten, Mullit, Zirkonsande, Zirkonsilikaten, Olivin, Talk, Glimmer, Koks, Feldspat, Diatomit, kalzinierte Kaoline, Kaolinit, Metakaolinit, Magnesiumsilikaten, Eisenoxid, Bauxit, Graphit, und Mischungen daraus, vorzugsweise bestehend aus Magnesiumsilikaten, vorzugsweise Talk, Zirkonsilikaten und Mischungen daraus,
wobei die Schlichtezusammensetzung einen pH-Wert von 7 bis 9,9 aufweist, vorzugsweise einen pH-Wert von 7,5 bis 9,5 aufweist und
wobei das Gewichtsverhältnis zwischen aa) Natriumhydrogencarbonat oder Natriumcarbonat und bb) Dinatriumdihydrogendiphosphat vorzugsweise im Bereich von 1 : 10 bis 10 : 1 liegt, weiter bevorzugt im Bereich von 1 : 5 bis 5 : 1 liegt, besonders bevorzugt im Bereich von 1:2 bis 2:1 liegt.

13. Verwendung eines Gemisches aus einem Alkalimetall- oder Erdalkalimetallsalz der Kohlensäure und einem Alkalimetall- oder Erdalkalimetallsalz der Diphosphorsäure als Zusatz in Schlichten für die Gießereiindustrie.

## Claims

1. Use of a wash composition comprising
a) 0.5% to 50% by weight, based on the total weight of the wash composition, of an alkali metal salt or alkaline earth metal salt of carbonic acid and 0.5% to 50% by weight, based on the total weight of the wash composition, of an alkali metal salt or alkaline earth metal salt of diphosphoric acid;
or
0.5% to 50% by weight, based on the total weight of the wash composition, of an alkali metal hydrogen carbonate salt or alkaline earth metal hydrogen carbonate salt;
or
0.5% to 50% by weight, based on the total weight of the wash composition, of an alkali metal dihydrogen diphosphate salt or alkaline earth metal dihydrogen diphosphate salt,
b) a carrier liquid and
c) refractories,
as a covering wash for producing mould coatings on expendable moulds or on cores for the casting of iron and steel, wherein the covering wash penetrates less than 2 mm into the mould material, forms a covering layer on the mould material after application to the mould material, and comes into direct contact with the melt,
wherein the use is as a covering wash for coating expendable moulds or on cores for the casting of iron and steel, which comprise silica sand and an acid-cured binder, for avoiding or reducing the formation of white film on the surface of castings during the casting operation.

2. Process for producing a casting, comprising the following steps:
(i) providing or producing a casting mould composed of chemically bound base mould material comprising one or more acid-cured binders and silica sand,
(ii) coating at least one region of the casting mould with a wash composition comprising
a) 0.5% to 50% by weight, based on the total weight of the wash composition, of an alkali metal salt or alkaline earth metal salt of carbonic acid and 0.5% to 50% by weight, based on the total weight of the wash composition, of an alkali metal salt or alkaline earth metal salt of diphosphoric acid;
or
0.5% to 50% by weight, based on the total weight of the wash composition, of an alkali metal hydrogen carbonate salt or alkaline earth metal hydrogen carbonate salt;
or
3% to 50% by weight, based on the total weight of the wash composition, of an alkali metal dihydrogen diphosphate salt or alkaline earth metal dihydrogen diphosphate salt,
b) a carrier liquid and
c) refractories
and drying the coated wash composition,
(iii) filling the casting mould with a molten iron-carbon alloy,
(iv) allowing the iron-carbon alloy to solidify in the casting mould so as to result in a casting,
wherein prior to coating the at least one region of the casting mould with the wash composition in step (ii)
a penetrating wash comprising aluminium oxide and/or kaolin,
or
a first covering wash is applied to the at least one region of the casting mould, wherein said first covering wash does not contain any alkali metal salt or alkaline earth metal salt of carbonic acid or any alkali metal salt or alkaline earth metal salt of diphosphoric acid, wherein the first covering wash
- contains mullite
and/or
- contains graphite.

3. Process according to Claim 2, wherein the first covering wash
- contains 50% to 75% by weight of mullite, based on the total weight of the covering wash,
and/or
- contains 1% to 5% by weight of graphite, based on the total weight of the covering wash.

4. Casting mould composed of a chemically bound base mould material for producing a casting, wherein the chemically bound base mould material comprises one or more acid-cured binders and silica sand, wherein at least one region of the casting mould has been coated with a wash composition comprising
a) 0.5% to 50% by weight, based on the total weight of the wash composition, of an alkali metal salt or alkaline earth metal salt of carbonic acid and 0.5% to 50% by weight, based on the total weight of the wash composition, of an alkali metal salt or alkaline earth metal salt of diphosphoric acid;
or
0.5% to 50% by weight, based on the total weight of the wash composition, of an alkali metal dihydrogen diphosphate salt or alkaline earth metal dihydrogen diphosphate salt,
b) a carrier liquid and
c) refractories,
wherein the casting mould additionally contains a covering wash, wherein said covering wash does not contain any alkali metal salt or alkaline earth metal salt of carbonic acid or any alkali metal salt or alkaline earth metal salt of diphosphoric acid, and wherein said covering wash forms a layer between the wash composition and the chemically bound base mould material.

5. Wash composition for producing mould coatings on expendable moulds or on cores for the casting of iron and steel, comprising
a) 0.5% to 50% by weight, based on the total weight of the wash composition, of an alkali metal salt or alkaline earth metal salt of carbonic acid and 0.5% to 50% by weight, based on the total weight of the wash composition, of an alkali metal salt or alkaline earth metal salt of diphosphoric acid,
b) a carrier liquid and
c) refractories.

6. Wash composition according to Claim 5, wherein the wash composition has a molar ratio between the alkali metal salt or alkaline earth metal salt of carbonic acid and the alkali metal salt or alkaline earth metal salt of diphosphoric acid in the range from 1:26 to 10:2.6, preferably in the range from 1:13 to 5:2.6, particularly preferably in the range from 1:5.2 to 1:1.3.

7. Wash composition according to either of Claims 5 and 6, wherein
the wash composition has a pH of from 7 to 9.9, preferably has a pH of from 7.5 to 9.5
and/or
the alkali metal salt or alkaline earth metal salt of diphosphoric acid is a dihydrogen diphosphate.

8. Wash composition according to any of Claims 5 to 7, wherein
(i) the alkali metal salt or alkaline earth metal salt of carbonic acid is sodium hydrogen carbonate or sodium carbonate
and/or
(ii) the alkali metal salt or alkaline earth metal salt of diphosphoric acid is disodium dihydrogen diphosphate.

9. Wash composition according to any of Claims 5 to 8, comprising
(a) 0.5% to 30% by weight, particularly preferably 3% to 15% by weight, of the alkali metal salt or alkaline earth metal salt of carbonic acid, based on the total weight of the wash composition,
and
(b) 0.5% to 30% by weight, particularly preferably 3% to 15% by weight, of the alkali metal salt or alkaline earth metal salt of diphosphoric acid, based on the total weight of the wash composition.

10. Wash composition according to any of Claims 5 to 9, wherein the carrier liquid
a) is water or contains water
and/or
b) is or contains one or more organic solvents, wherein one or all of the organic solvents preferably is alcohol or are alcohols.

11. Wash composition according to any of Claims 5 to 10, wherein the carrier liquid is an alcohol or contains alcohol, preferably an alcohol selected from the group consisting of methanol, ethanol, 1-propanol, 2-propanol, n-butanol, isobutanol, sec-butanol, tert-butanol, pentan-1-ol, pentan-2-ol, pentan-3-ol, 2-methylbutan-1-ol, 2-methylbutan-2-ol, 3-methylbutan-1-ol, 3-methylbutan-2-ol, 2,2-dimethylpropan-1-ol, hexan-1-ol, hexan-2-ol, hexan-3-ol, 2-methylpentan-1-ol, 3-methylpentan-1-ol, 4-methylpentan-1-ol, 2-methylpentan-2-ol, 3-methylpentan-2-ol, 4-methylpentan-2-ol, 2-methylpentan-3-ol, 3-methylpentan-3-ol, 2,2-dimethylbutan-1-ol, 2,3-dimethylbutan-1-ol, 3,3-dimethylbutan-1-ol, 2,3-dimethylbutan-2-ol, 3,3-dimethylbutan-2-ol, 2-ethylbutan-1-ol and mixtures thereof, with particular preference given to ethanol, 1-propanol, 2-propanol and mixtures thereof.

12. Wash composition according to any of Claims 5 to 11, comprising
a) 3% to 15% by weight of sodium hydrogen carbonate and/or sodium carbonate and 3% to 15% by weight of disodium dihydrogen diphosphate, in each case based on the total weight of the wash composition,
b) a carrier liquid, preferably selected from the group consisting of water, ethanol, 1-propanol, 2-propanol and mixtures thereof,
c) refractories, selected from the group consisting of silica, aluminium oxide, preferably corundum, zirconium dioxide, aluminium silicates, mullite, zircon sands, zirconium silicates, olivine, talc, mica, coke, feldspar, diatomite, calcined kaolins, kaolinite, metakaolinite, magnesium silicates, iron oxide, bauxite, graphite and mixtures thereof, preferably consisting of magnesium silicates, preferably talc, zirconium silicates and mixtures thereof,
wherein the wash composition has a pH of from 7 to 9.9, preferably has a pH of from 7.5 to 9.5, and
wherein the weight ratio between aa) sodium hydrogen carbonate or sodium carbonate and bb) disodium dihydrogen diphosphate is preferably in the range from 1:10 to 10:1, more preferably is in the range from 1:5 to 5:1, particularly preferably is in the range from 1:2 to 2:1.

13. Use of a mixture of an alkali metal salt or alkaline earth metal salt of carbonic acid and an alkali metal salt or alkaline earth metal salt of diphosphoric acid as additive in washes for the foundry industry.

## Revendications

1. Utilisation d'une composition de poteyage comprenant
a) 0,5 à 50 % en poids, par rapport au poids total de la composition de poteyage, d'un sel de métal alcalin ou alcalino-terreux de l'acide carbonique et 0,5 à 50 % en poids, par rapport au poids total de la composition de poteyage, d'un sel de métal alcalin ou alcalino-terreux de l'acide diphosphorique ;
ou
0,5 à 50 % en poids, par rapport au poids total de la composition de poteyage, d'un sel de métal alcalin ou alcalino-terreux du carbonate d'hydrogène ;
ou
0,5 à 50 % en poids, par rapport au poids total de la composition de poteyage, d'un sel de métal alcalin ou alcalino-terreux du dihydrogène diphosphate,
b) un liquide porteur et
c) des matières réfractaires,
en tant qu'enduit de recouvrement pour la fabrication de revêtements de moule sur des moules perdus ou sur des noyaux pour la fonte de fer et d'acier, dans laquelle l'enduit de recouvrement pénètre de moins de 2 mm dans le matériau de moule, forme une couche de couverture sur le matériau de moule après l'application sur le matériau de moule et entre en contact direct avec la masse fondue,
dans laquelle l'utilisation comme enduit de recouvrement a pour objectif le revêtement de moules perdus ou sur des noyaux pour la fonte de fer et d'acier, qui comprennent du sable de quartz et un liant durci par acide, pour éviter ou réduire la formation de dépôt blanc sur la surface de pièces moulées pendant le processus de coulée.

2. Procédé de fabrication d'une pièce en fonte, avec les étapes suivantes :
(i) la fourniture ou la fabrication d'un moule de coulée en matière première de moulage liée chimiquement, comprenant un ou plusieurs liants durcis par acide et du sable de quartz,
(ii) le revêtement d'au moins une zone du moule de coulée avec une composition de poteyage comprenant
a) 0,5 à 50 % en poids, par rapport au poids total de la composition de poteyage, d'un sel de métal alcalin ou alcalino-terreux de l'acide carbonique et 0,5 à 50 % en poids, par rapport au poids total de la composition de poteyage, d'un sel de métal alcalin ou alcalino-terreux de l'acide diphosphorique ;
ou
0,5 à 50 % en poids, par rapport au poids total de la composition de poteyage, d'un sel de métal alcalin ou alcalino-terreux du carbonate d'hydrogène ;
ou
3 à 50 % en poids, par rapport au poids total de la composition de poteyage, d'un sel de métal alcalin ou alcalino-terreux du dihydrogène diphosphate,
b) un liquide porteur et
c) des matières réfractaires
et le séchage de la composition de poteyage revêtue,
(iii) le remplissage du moule de coulée avec un alliage fer-carbone en fusion,
(iv) la solidification de l'alliage fer-carbone dans le moule de coulée de façon à obtenir une pièce de coulée,
dans lequel, avant le revêtement de l'au moins une zone du moule de coulée avec la composition de poteyage à l'étape (ii)
une couche de pénétration contenant de l'oxyde d'aluminium et/ou du kaolin,
ou
un premier enduit de recouvrement est appliqué sur l'au moins une zone du moule de coulée, dans lequel ledit premier enduit de recouvrement ne comprend aucun sel de métal alcalin ou alcalino-terreux de l'acide carbonique et aucun sel de métal alcalin ou alcalino-terreux de l'acide diphosphorique,
dans lequel le premier enduit de recouvrement
- contient de la mullite,
et/ou
- contient du graphite.

3. Procédé selon la revendication 2, dans lequel le premier enduit de recouvrement
- contient 50 à 75 % en poids de mullite, par rapport au poids total de l'enduit de recouvrement,
et/ou
- contient 1 à 5 % en poids de graphite, par rapport au poids total de l'enduit de recouvrement.

4. Moule de coulée composé d'une matière première de moulage liée chimiquement pour la fabrication d'une pièce de coulée, dans lequel la matière première de moulage liée chimiquement comprend un ou plusieurs liants durcis par acide et du sable de quartz, dans lequel au moins une zone du moule de coulée est revêtue d'une composition de poteyage, comprenant
a) 0,5 à 50 % en poids, par rapport au poids total de la composition de poteyage, d'un sel de métal alcalin ou alcalino-terreux de l'acide carbonique et 0,5 à 50 % en poids, par rapport au poids total de la composition de poteyage, d'un sel de métal alcalin ou alcalino-terreux de l'acide diphosphorique ;
ou
0,5 à 50 % en poids, par rapport au poids total de la composition de poteyage, d'un sel de métal alcalin ou alcalino-terreux du dihydrogène diphosphate,
b) un liquide porteur et
c) des matières réfractaires
dans lequel le moule de coulée contient en supplément un enduit de recouvrement, dans lequel ledit enduit de recouvrement ne comprend pas de sel de métal alcalin ou de métal alcalino-terreux de l'acide carbonique et de sel de métal alcalin ou de métal alcalino-terreux de l'acide diphosphorique, et dans lequel ledit enduit de recouvrement forme une couche entre la composition de poteyage et la matière première de moulage liée chimiquement.

5. Composition de poteyage pour la fabrication de revêtements de moule sur des moules perdus ou sur des noyaux pour la fonte de fer et d'acier, comprenant
a) 0,5 à 50 % en poids, par rapport au poids total de la composition de poteyage, d'un sel de métal alcalin ou alcalino-terreux de l'acide carbonique et 0,5 à 50 % en poids, par rapport au poids total de la composition de poteyage, d'un sel de métal alcalin ou alcalino-terreux de l'acide diphosphorique,
b) un liquide porteur et
c) des matières réfractaires.

6. Composition de poteyage selon la revendication 5, dans laquelle la composition de poteyage présente un rapport molaire entre le sel de métal alcalin ou alcalino-terreux de l'acide carbonique et le sel de métal alcalin ou alcalino-terreux de l'acide diphosphorique dans la plage de 1: 26 à 10: 2,6, de préférence dans la plage de 1: 13 à 5: 2,6, de manière particulièrement préférée dans la plage de 1: 5,2 à 1: 1,3.

7. Composition de poteyage selon l'une quelconque des revendications 5 ou 6, dans laquelle
la composition de poteyage présente une valeur de pH de 7 à 9,9, de préférence présente une valeur de pH de 7,5 à 9,5
et/ou
le sel de métal alcalin ou de métal alcalino-terreux de l'acide diphosphorique est un dihydrogène diphosphate.

8. Composition de poteyage selon l'une quelconque des revendications 5 à 7, dans laquelle
(i) le sel de métal alcalin ou alcalino-terreux de l'acide carbonique est de l'hydrogénocarbonate de sodium ou du carbonate de sodium
et/ou
(ii) le sel de métal alcalin ou alcalino-terreux de l'acide diphosphorique est du dihydrogénodiphosphate disodique.

9. Composition de poteyage selon l'une quelconque des revendications 5 à 8, comprenant
(a) 0,5 à 30 % en poids, de manière particulièrement préférée 3 à 15 % en poids, du sel de métal alcalin ou de métal alcalino-terreux de l'acide carbonique, par rapport au poids total de la composition de poteyage
et
(b) 0,5 à 30 % en poids, de manière particulièrement préférée 3 à 15 % en poids, du sel de métal alcalin ou de métal alcalino-terreux de l'acide diphosphorique, par rapport au poids total de la composition de poteyage.

10. Composition de poteyage selon l'une quelconque des revendications 5 à 9, dans laquelle le liquide porteur
a) est de l'eau ou contient de l'eau
et/ou
b) est ou contient un ou plusieurs solvants organiques, dans laquelle un ou tous les solvants organiques sont de préférence de l'alcool ou des alcools.

11. Composition de poteyage selon l'une quelconque des revendications 5 à 10, dans laquelle le liquide porteur est ou contient un alcool, de préférence un alcool choisi dans le groupe constitué de méthanol, éthanol, 1-propanol, 2-propanol, n-butanol, isobutanol, sec-butanol, tert-butanol, pentan-1-ol, pentan-2-ol, pentan-3-ol, 2-méthyl-butan-1-ol, 2-méthyl-butan-2-ol, 3-méthyl-butan-1-ol, 3-méthyl-butan-2-ol, 2,2-diméthyl-propan-1-ol, hexan-1-ol, hexan-2-ol, hexan-3-ol, 2-méthylpentan-1-ol, 3-méthylpentan-1-ol, 4-méthylpentan-1-ol, 2-méthylpentan-2-ol, 3-méthylpentan-2-ol, 4-méthylpentan-2-ol, 2-méthylpentan-3-ol, 3-méthylpentan-3-ol, 2,2-diméthylbutan-1-ol, 2,3-diméthylbutan-1-ol, 3,3-diméthylbutan-1-ol, 2,3-diméthylbutan-2-ol, 3,3-diméthylbutan-2-ol, 2-éthylbutan-1-ol et leurs mélanges, de manière particulièrement préférée éthanol, 1-propanol, 2-propanol et leurs mélanges.

12. Composition de poteyage selon l'une quelconque des revendications 5 à 11, comprenant
a) 3 à 15 % en poids d'hydrogénocarbonate de sodium et/ou de carbonate de sodium et 3 à 15 % en poids de dihydrogénodiphosphate disodique, chacun par rapport au poids total de la composition de poteyage,
b) un liquide porteur, de préférence choisi dans le groupe constitué d'eau, éthanol, 1-propanol, 2-propanol et de mélanges de ceux-ci,
c) des matières réfractaires, choisies dans le groupe constitué de quartz, oxyde d'aluminium, de préférence corindon, dioxyde de zirconium, silicates d'aluminium, mullite, sable de zirconium, silicates de zirconium, olivine, talc, mica, coke, feldspath, diatomite, kaoline calcinée, kaolinite, métakaolinite, silicates de magnésium, oxyde de fer, bauxite, graphite, et leurs mélanges, de préférence constitué de silicates de magnésium, de préférence talc, silicates de zirconium et leurs mélanges,
dans laquelle la composition de poteyage présente une valeur de pH de 7 à 9,9, de préférence présente une valeur de pH de 7,5 à 9,5 et
dans laquelle le rapport pondéral entre aa) l'hydrogénocarbonate de sodium ou le carbonate de sodium et bb) le dihydrogénodiphosphate disodique est de préférence dans la plage de 1: 10 à 10: 1, par ailleurs de manière préférée dans la plage de 1: 5 à 5: 1, de manière particulièrement préférée dans la plage de 1:2 à 2:1.

13. Utilisation d'un mélange d'un sel de métal alcalin ou alcalino-terreux de l'acide carbonique et d'un sel de métal alcalin ou alcalino-terreux de l'acide diphosphorique comme additif dans des enduits pour l'industrie de la fonderie.
